# EUROPÄISCHE PATENTSCHRIFT

(11) **EP 3 753 802 B1**
(45) Veröffentlichungstag und Bekanntmachung des Hinweises auf die Patenterteilung: **29.07.2026**
(21) Anmeldenummer: 20177931.1
(22) Anmeldetag: 03.06.2020
(51) Int. Cl.: B61L 19/06, B61L 21/04, B61L 25/08, B61L 27/00, G06F 11/00

(54) **VERFAHREN ZUR GENERISCHEN ANZEIGESICHERUNG UND BEDIENSYSTEM**
METHOD FOR GENERIC DISPLAY PROTECTION AND CONTROL SYSTEM
PROCÉDÉ DE SAUVEGARDE D'AFFICHAGE GÉNÉRIQUE ET SYSTÈME D'EXPLOITATION

(30) Priorität: 19.06.2019 DE 102019208925
(43) Veröffentlichungstag der Anmeldung: 23.12.2020
(73) Patentinhaber: Siemens Mobility GmbH, 80997 München (DE)
(72) Erfinder: Seidler, Gerald, 38302 Wolfenbüttel (DE)
(74) Vertreter: Siemens Patent Attorneys

(56) Entgegenhaltungen:
- DE-A1- 102012 212 386
- DE-A1- 102012 221 714
- DE-A1- 102013 202 814
- DE-A1- 102014 201 551

## Beschreibung

Es wird ein Verfahren zur generischen Anzeigesicherung, insbesondere in einer Eisenbahnanlage, angegeben. Darüber hinaus wird ein Bediensystem für ein solches Verfahren angegeben. Die Druckschrift WO 2014/033001 A2 betrifft eine Vorortbedienung einer Komponente einer Eisenbahngleisanlage.

Die Druckschrift DE 10 2014 201 551 A1 betrifft ein Verfahren zur Fehleroffenbarung bei einem Stellwerksrechnersystem.

Eine zu lösende Aufgabe liegt darin, ein Verfahren anzugeben, mit dem Daten über eine Systemkomponente zuverlässig angezeigt werden. Eine weitere zu lösende Aufgabe liegt darin, ein Bediensystem für ein solches Verfahren anzugeben.

Diese Aufgabe wird erfindungsgemäß durch ein Verfahren mit den Merkmalen des Anspruchs 1 und dem Bediensystem nach Anspruch 9 gelöst. Bevorzugte Weiterbildungen sind Gegenstand der übrigen Ansprüche.

In Systemen zur Steuerung insbesondere einer Eisenbahnanlage wird in bestimmten Situationen eine gesicherte Anzeige der Zustände der Außenanlage benötigt, um zum Beispiel nachgelagert eine Bedienung ausführen zu können, die eine Umgehung einer sicheren Systemkomponente, wie ein Stellwerk oder ein RBC (RBC: Radio Block Centre) ermöglicht. In Abhängigkeit vom definierten Sicherheitsniveau muss die gesicherte Anzeige eine entsprechend vorgegebene Fehlerrate unterschreiten. Die Fehlerrate liegt zum Beispiel bei höchstens 10-8 oder bei höchstens 10-10.

Für eine gesicherte Anzeige werden in den normalerweise verwendeten Leittechniksystemen und Bedienplatzsystemen Verfahren implementiert, die typischerweise die vorhandene Logik um ein Referenzsystem erweitern. Dieses Referenzsystem hat in der Regel ebenfalls Kenntnis über die Anlagenzustände der Systemkomponente. Originalsystem und Referenzsystem tauschen dabei Prüfdaten aus, um Abweichungen in den Anlagenzuständen erkennen zu können. Der Vergleich der Prüfdaten wird teilweise auch vom Sicherungssystem, also der Systemkomponente, wie dem Stellwerk oder dem RBC, durchgeführt, da nur dies das entsprechende Sicherheitsniveau bereitstellen kann.

Bei dem hier beschriebenen Verfahren werden als Referenzinformation für die sichere Anzeige auf dem Bediensystem lediglich die Zustände des sicheren Systems selbst, also zum Beispiel des Stellwerks oder des RBCs, verwendet und der Vergleich wird in einem generischen System durchgeführt, das keine weitere Kenntnis über die Zustände der Außenanlage benötigt. Damit wird ein im Regelfall teures Referenzsystem überflüssig.

Insbesondere können aufgrund des hier beschriebenen Verfahrens an dem Bedienplatz vergleichsweise einfach Modifikationen ohne ein weiteres amtliches Zulassungsverfahren vorgenommen werden, da die Sicherheit des Gesamtsystems durch die Kombination aus Systemkomponente + Bedienplatz + Empfangsgerät + Prüfrechner gewährleistet werden kann.

Besonders bevorzugt überträgt das sichere System, also die Systemkomponente, wie ein Stellwerk oder ein RBC, bei jeder Zustandsänderung eines Elementes der Systemkomponente einen bevorzugt kryptographisch geschützten Zustandsdatensatz, der insbesondere eine Element-ID, die Zustandsänderung und einen Zeitstempel enthält. Der Zustandsdatensatz wird vom sicheren System bevorzugt mit einem öffentlichen Schlüssel des Prüfrechners verschlüsselt. Der Bedienplatz speichert diesen Datensatz in seinem Prozessabbild, bevorzugt ohne ihn entschlüsseln zu können.

Bei dem Bedienplatz handelt es sich beispielsweise um eine feststehende, bestimmungsgemäß unbewegliche Komponente wie ein Bedienpult. Alternativ kann der Bedienplatz eine bewegliche Komponente, wie ein tragbares Terminal, sein. Bevorzugt ist auch die Systemkomponente bestimmungsgemäß ortsfest und unbeweglich.

Gemäß zumindest einer Ausführungsform ist das Empfangsgerät ein Mobiltelefon oder ein Smartphone. Alternativ kann das Empfangsgerät ein Tablet, ein Laptop, eine Smartwatch, eine Webcam in Verbindung mit einem weiteren Rechner oder ein Funkmeldeempfänger sein.

Erfindungsgemäß stammt der erste Prüfdatensatz verschlüsselt von der Systemkomponente. Erfindungsgemäß wird der erste Prüfdatensatz im Bedienplatz nicht entschlüsselt und somit unentschlüsselt an das Empfangsgerät weitergeleitet, beispielsweise als QR-Code über den ersten Datenkanal. Das heißt, bei dem ersten Prüfdatensatz kann es sich inhaltlich um die direkt von der Systemkomponente stammenden Informationen über den Zustand handeln. Der erste Prüfdatensatz kann auch lediglich auf den direkt von der Systemkomponente stammenden Informationen basieren, zum Beispiel, indem diese Informationen vom Bedienplatz um weitere Informationen ergänzt werden und/oder in einen größeren Datensatz eingebunden werden. Solche weiteren Informationen beinhalten zum Beispiel einen Zeitstempel, der die Sendezeit vom Bedienplatz an das Empfangsgerät angibt.

Erfindungsgemäß teilt die Systemkomponente den Zustand dem Bedienplatz außerdem unverschlüsselt mit. Das heißt, von der Systemkomponente erfolgt einerseits eine verschlüsselte Übertragung von Informationen über den Zustand an den Bedienplatz, wobei der Bedienplatz diese Informationen bevorzugt nicht entschlüsseln kann, und andererseits werden die Informationen über den Zustand dem Bedienplatz unverschlüsselt mitgeteilt und zum Erstellen des Prozessabbilds herangezogen.

Alternativ erfolgt die Übermittlung der Informationen über den Zustand an den Bedienplatz nur einmal und verschlüsselt. Der Bedienplatz speichert diese Informationen einerseits unverändert und verschlüsselt ab und entschlüsselt diese Informationen andererseits, um das Prozessabbild zu erhalten. Der erste Prüfdatensatz basiert dann auf den unentschlüsselten Informationen und der zweite Prüfdatensatz auf dem Prozessabbild.

Erfindungsgemäß wird der zweite Prüfdatensatz über den Zustand aus dem Prozessabbild vom Bedienplatz verschlüsselt erzeugt, und der für das Empfangsgerät nicht entschlüsselbare zweite Prüfdatensatz wird nachfolgend über den zweiten Datenkanal an das Empfangsgerät weitergeleitet.

Erfindungsgemäß wird mit dem Verfahren überprüft, ob der im Prozessabbild hinterlegte verarbeitete Zustand mit dem im ersten Prüfdatensatz enthaltenen Zustand übereinstimmt.

Gemäß zumindest einer Ausführungsform ist der zweite Datenkanal eine NFC-Datenübertragung. Das heißt, das Empfangsgerät befindet sich bei der Übertragung des zweiten Prüfdatensatzes nahe an dem Bedienplatz. Optional stehen der Bedienplatz und das Empfangsgerät beim Übertragen des zweiten Prüfdatensatzes in direktem Kontakt zueinander.

Gemäß zumindest einer Ausführungsform ist der erste Datenkanal eine optische Sichtverbindung. Das heißt, der erste Prüfdatensatz wird auf einem Bildschirm des Bedienplatzes angezeigt und der immer noch verschlüsselte erste Prüfdatensatz wird dann vom Bediener mit dem Empfangsgerät abfotografiert. Der erste Prüfdatensatz ist zum Beispiel ein zweidimensionaler Code, wie ein QR-Code, der erst im Prüfrechner entschlüsselt wird, oder ein anderer maschinenlesbarer Code.

Alternativ oder zusätzlich zu einem Abfotografieren eines zweidimensionalen Codes kann der erste Datenkanal für den ersten Prüfdatensatz auch eine akustische Nachricht sein, insbesondere eine Tonsequenz, die von einem Mikrofon des Empfangsgeräts aufgezeichnet wird. Eine solche Tonsequenz kann für das menschliche Gehör hörbar oder auch unhörbar sein. Weiterhin ist es möglich, dass Kurzstreckenfunk zum Einsatz kommt, zum Beispiel Bluetooth der Klasse 3 oder der Klasse 2. Dabei beträgt ein Abstand zwischen dem Bedienplatz und dem Empfangsgerät bestimmungsgemäß bevorzugt höchstens 10 m oder 5 m. Der Bedienplatz und/oder das Empfangsgerät können technische Mittel umfassen, die eine Kommunikation über größere Abstände hinweg unterbinden.

Genauso kann alternativ der erste Datenkanal eine NFC-Datenübertragung und der zweite Datenkanal eine optische Sichtverbindung, eine akustische Verbindung oder Kurzstreckenfunk sein.

Gemäß zumindest einer Ausführungsform erfolgt im Schritt H) das Weiterleiten des ersten Ergebnisdatensatzes vom Empfangsgerät an den Bedienplatz mittels des ersten Datenkanals. Alternativ kann der zweite Datenkanal herangezogen werden.

Gemäß zumindest einer Ausführungsform erfolgt im Schritt I) der Vergleich durch einen Bediener. Dabei wird der vom Bedienplatz entschlüsselte erste Ergebnisdatensatz bevorzugt direkt vom Bedienplatz angezeigt und der vom Empfangsgerät entschlüsselte zweite Ergebnisdatensatz wird bevorzugt direkt am Empfangsgerät angezeigt.

Gemäß zumindest einer Ausführungsform werden die Schritte B), D), E), F), G) und H) teilweise oder, bevorzugt, vollständig computerimplementiert durchgeführt. Dagegen erfolgen die Schritte A), C) und I) teilweise oder vollständig durch den Bediener. Das heißt, die Schritte A), C) und I) sind nicht ohne eine Mitwirkung des Bedieners durchführbar. Insbesondere erfolgt der Vergleich im Schritt I) alleine durch den Bediener.

Alternativ werden die Schritte B), C), E), F), G) und H) teilweise oder, bevorzugt, vollständig computerimplementiert durchgeführt und die Schritte A), D) und I) erfolgen teilweise oder vollständig durch den Bediener.

Gemäß zumindest einer Ausführungsform besteht zumindest während der Schritte C) bis G) oder während des gesamten Verfahrens keine direkte Kommunikationsverbindung zwischen dem Prüfrechner und dem Bedienplatz. Das heißt, der Bedienplatz und der Prüfrechner können unabhängig voneinander sein. Es ist möglich, dass eine Kommunikation zwischen dem Bedienplatz und dem Prüfrechner ausschließlich mittels des Empfangsgeräts gegeben ist. Bevorzugt liegt ebenso wenig eine direkte Kommunikation zwischen der Systemkomponente und dem Prüfrechner vor.

Gemäß zumindest einer Ausführungsform ist der erste Prüfdatensatz nur vom Bedienplatz und/oder von der Systemkomponente erzeugbar und der zweite Prüfdatensatz nur vom Bedienplatz.

Alternativ oder zusätzlich sind die Prüfdatensätze nur vom Bedienplatz aus ausschließlich vom Empfangsgerät wirksam empfangbar. Wirksam bedeutet, dass keine anderen Geräte mit den Prüfdatensätzen etwas Sinnvolles bewerkstelligen können.

Gemäß zumindest einer Ausführungsform ist zwischen den Schritten A) und H) eine zuvor festgelegte maximale Bestätigungszeitspanne einzuhalten. Die maximale Bestätigungszeitspanne liegt zum Beispiel bei 30 s oder weniger oder bei 10 s oder weniger.

Gemäß zumindest einer Ausführungsform können die Schritte C), D), G) und/oder H) nur mit einem zuvor zugelassenen und im Prüfrechner registrierten Empfangsgerät erfolgen. Alternativ oder zusätzlich können in Verbindung mit dem Bedienplatz nur zuvor zugelassene, registrierte Empfangsgeräte verwendet werden. Damit ist verhinderbar, dass nicht autorisierte Geräte als Empfangsgerät verwendet werden. Es können bevorzugt mehrere verschiedene Empfangsgeräte gleichzeitig registriert sein.

Gemäß zumindest einer Ausführungsform ist der zu prüfende Zustand der Zustand eines Teils der funktionskritischen Systemkomponente. Die Systemkomponente ist insbesondere aus folgender Gruppe ausgewählt: Bahnstellwerk, ECTS-Streckenzentrale (ECTS: European Train Control System), Bahnsignalanlage.

Das heißt, bei dem zu prüfenden Zustand handelt es sich insbesondere um einen Zustand einer Betriebsanlage, wie einer Eisenbahnanlage. Alternativ zu Bahnanlagen kann das hier beschriebene Verfahren auch für andere Verkehrsanlagen oder Transportanlagen mit sicherheitskritischen Elementen verwendet werden. Weiterhin kann das hier beschriebene Verfahren zur Anzeigeüberprüfung insbesondere von Prozesszuständen in Anlagen wie Chemiereaktoren, Kraftwerken, Fabriken und/oder Logistikkomplexen herangezogen werden.

Darüber hinaus wird ein Bediensystem für ein Verfahren, wie oben beschrieben, angegeben. Merkmale des Verfahrens sind daher auch für das Bediensystem offenbart und umgekehrt.

In mindestens einer Ausführungsform umfasst das Bediensystem:
- den Bedienplatz, der dazu eingerichtet ist, das Auswählen des zu prüfenden Zustands zu ermöglichen, den verschlüsselten ersten Prüfdatensatz und den verschlüsselten zweiten Prüfdatensatz je über den Zustand zu erzeugen oder zu ermitteln, den ersten Prüfdatensatz mit dem ersten Datenkanal und den zweiten Prüfdatensatz mit dem zweiten Datenkanal direkt an das Empfangsgerät zu senden, den ersten Ergebnisdatensatz zu entschlüsseln sowie den entschlüsselten ersten Ergebnisdatensatz anzuzeigen,
- das Empfangsgerät, das dazu eingerichtet ist, die Prüfdatensätze direkt vom Bedienplatz zu empfangen, die verschlüsselten Prüfdatensätze an den Prüfrechner zu senden, den verschlüsselten ersten Ergebnisdatensatz an den Bedienplatz weiterzuleiten und den zweiten Ergebnisdatensatz zu entschlüsseln sowie den entschlüsselten zweiten Ergebnisdatensatz anzuzeigen, und
- den Prüfrechner, der dazu eingerichtet ist, die Prüfdatensätze zu empfangen, zu entschlüsseln und miteinander zu vergleichen, ferner die Ergebnisdatensätze über das Ergebnis des Vergleichs zu erzeugen sowie verschlüsselt an das Empfangsgerät zu senden.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
Figur 1 ein Blockdiagramm eines hier beschriebenen Verfahrens zeigt,
Figur 2 einen Teilschritt eines hier beschriebenen Verfahrens illustriert, und
Figur 3 eine schematische Darstellung eines hier beschriebenen Bediensystems für hier beschriebene Verfahren zeigt.

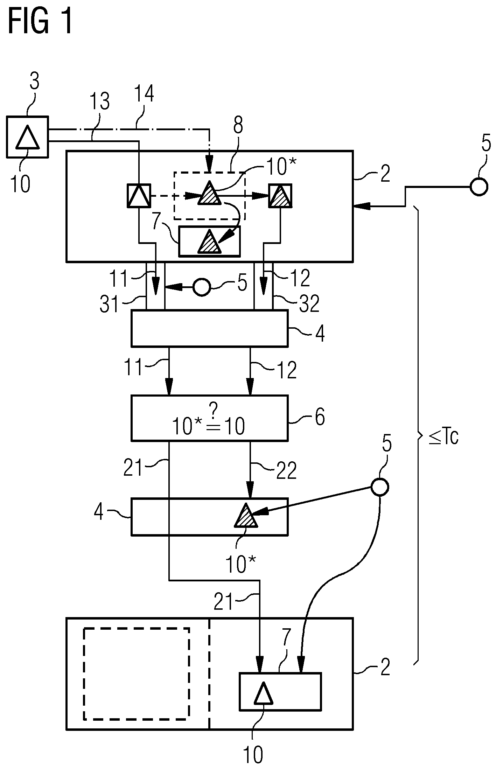

In Figur 1 ist ein Ausführungsbeispiel eines hier beschriebenen Verfahrens als Blockdiagramm dargestellt. In einem ersten Schritt erfolgt durch einen Bediener 5 an einem Bedienplatz 2 eine Auswahl eines zu prüfenden Zustands 10 einer Systemkomponente 3. Die Systemkomponente 3 ist zum Beispiel ein Stellwerk einer Eisenbahnanlage und der Zustand 10 ist etwa eine gerade vorliegende Einstellung eines Elements des Stellwerks.

Der Zustand 10 wird bevorzugt verschlüsselt von der Systemkomponente 3 über einen bevorzugt verschlüsselten, alternativ unverschlüsselten, Kommunikationskanal 13 an den Bedienplatz 2 übermittelt. Der originale, übermittelte und verschlüsselte Datensatz bleibt im Bedienplatz 2 gespeichert, in Figur 1 symbolisiert durch ein umrahmtes Dreieck.

Außerdem werden Informationen über den Zustand 10 über einen bevorzugt unverschlüsselten, alternativ verschlüsselten, Informationskanal 14 an den Bedienplatz 2 übermittelt. Aus diesen Informationen wird ein Prozessabbild 8 über den Zustand 10 aufgebaut. Da zum Erzeugen des Prozessabbilds 8 die Informationen von der Systemkomponente 3 üblicherweise im Bedienplatz 2 verarbeitet werden, kann der im Prozessabbild angegebenen Zustand als verarbeiteter Zustand 10* aufgefasst werden, in Figur 1 symbolisiert als schraffiertes Dreieck.

Der verarbeitete Zustand 10* wird bevorzugt an einem Bildschirm 7 des Bedienplatzes 2 angezeigt. Aufgrund von Fehlern in der Verarbeitung der Daten von der Systemkomponente ist es allerdings mit einer geringen Wahrscheinlichkeit möglich, dass der verarbeitete Zustand 10*e nicht mit einer Außenwelt, also dem tatsächlichen Zustand 10 der Systemkomponente 3, übereinstimmt. Mit dem hier beschriebenen Verfahren ist dies überprüfbar.

Alternativ zur Übertragung über die beiden Kanäle 13, 14 erfolgt eine Übertragung nur über den Kanal 13, woraufhin der verarbeitete Zustand 10* aus den verschlüsselten Daten generiert wird, wobei die ursprünglichen Daten von der Systemkomponente 2 aber erhalten bleiben. Dies ist in Figur 1 durch eine Strichlinie hin in das Prozessabbild 8 symbolisiert.

In einem weiteren Schritt wird aus dem Prozessabbild 8 ein verschlüsselter zweiter Prüfdatensatz 12 erzeugt, in Figur 1 symbolisiert durch ein umrahmtes schraffiertes Dreieck. Außerdem wird aus den verschlüsselten Informationen über den Zustand 10 aus dem verschlüsselten Kommunikationskanal 13 ein erster Prüfdatensatz 11 erzeugt oder der erste Prüfdatensatz 11 ist gleich einem Datensatz über den Zustand 10 aus dem verschlüsselten Kommunikationskanal 13.

Diese Prüfdatensätze 11, 12 werden über zwei verschiedene Datenkanäle 31, 32 an ein Empfangsgerät 4, bevorzugt ein Smartphone, übermittelt. Die Übertragung mit dem zweiten Datenkanal 32 erfolgt automatisch, wohingegen für die Übertragung mit dem ersten Datenkanal 31 ein Mitwirken des Bedieners 5 erforderlich ist, oder umgekehrt. Der erste Datenkanal 31 ist zum Beispiel eine Sichtverbindung, etwa ein QR-Code, oder ein akustisches Signal und der zweite Datenkanal zum Beispiel eine Funkverbindung, oder umgekehrt.

Daraufhin werden die immer noch verschlüsselten, vom Empfangsgerät 4 inhaltlich nicht lesbaren Prüfdatensätze 11, 12 an einen Prüfrechner 6 weitergeleitet, im Prüfrechner 6 entschlüsselt und hinsichtlich ihres Informationsgehalts miteinander verglichen. Das heißt, es wird überprüft, ob der Zustand 10* aus dem Prozessabbild 8 gleich dem Zustand 10 aus der Systemkomponente 3 ist. Über das Ergebnis des Vergleichs werden zwei verschlüsselte Ergebnisdatensätze 21, 22 generiert, die beide an das Empfangsgerät 4 geschickt werden.

Die Ergebnisdatensätze 21, 22 können die gleichen Informationen enthalten wie die Prüfdatensätze 11, 12 oder aus den gleichen Informationen bestehen. Das heißt, aus den Ergebnisdatensätzen 21, 22 können in diesem Fall der Zustand 10 und der verarbeitete Zustand 10* abgelesen werden. Es ist dabei möglich, dass inhaltlich der erste Ergebnisdatensatz 21 dem ersten Prüfdatensatz 11 entspricht und der zweite Ergebnisdatensatz 22 dem zweiten Prüfdatensatz 12, oder alternativ dass inhaltlich der erste Ergebnisdatensatz 21 dem zweiten Prüfdatensatz 12 entspricht und der zweite Ergebnisdatensatz 22 dem ersten Prüfdatensatz 11, wobei die Ergebnisdatensätze 21, 22 jeweils zusätzlich ein Vergleichsergebnis beinhalten können. Somit können die Ergebnisdatensätze 21, 22 anders verschlüsselte, aber inhaltliche Kopien der Prüfdatensätze 11, 12 sein. Diese Ausführungen zu den Datensätzen 11, 12, 21, 22 gelten bevorzugt auch in allen anderen Ausführungsbeispielen.

Der erste Ergebnisdatensatz 21 wird nachfolgend vom Empfangsgerät 4 unentschlüsselt an den Bedienplatz 2 weitergeleitet und am Bildschirm 7 angezeigt. Dagegen wird der zweite Ergebnisdatensatz 22 im Empfangsgerät 4 entschlüsselt und vom Empfangsgerät 4 angezeigt. Der Bediener 5 führt nun einen Vergleich durch, ob die beiden Zustände 10, 10* gleich sind und ob somit der Bedienplatz 2 den tatsächlichen Zustand 10 korrekt wiedergibt.

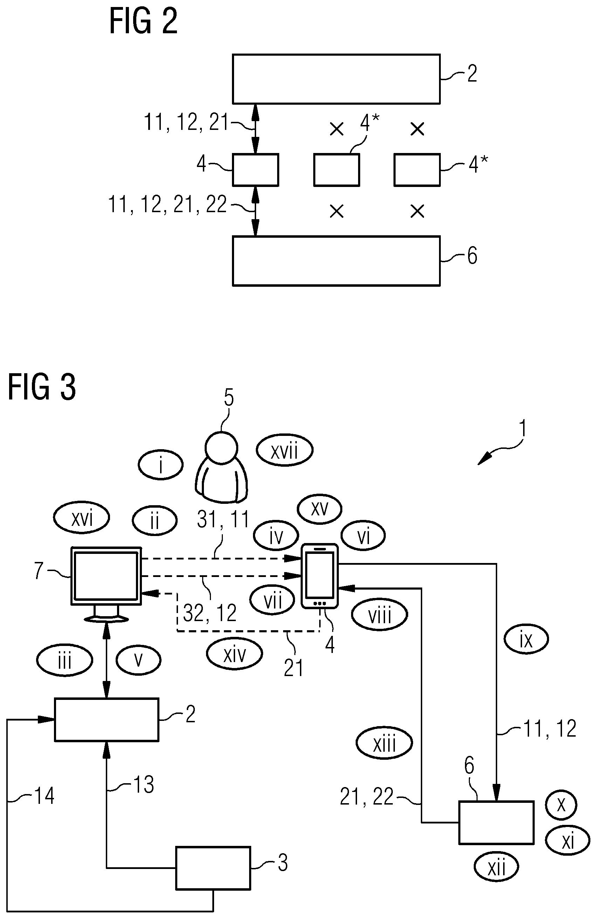

In Figur 2 ist ein Teilschritt des Verfahrens gezeigt, nämlich das Senden und Empfangen der Datensätze 11, 12, 21, 22 mit dem Empfangsgerät 4. Dabei kann das Senden und/oder Empfangen der Datensätze 11, 12, 21, 22 nur mit dem registrierten Empfangsgerät 4 wirksam versandt werden. Wirksam bedeutet, dass das Senden und/oder Empfangen von Daten über andere, zum betreffenden Zeitpunkt nicht als anweisungsberechtigt registrierte Empfangsgeräte 4*, Bedienplätze 2, Prüfrechner 6 und/oder Systemkomponenten verhindert ist. Die Registrierung erfolgt im Prüfrechner 6, in der Systemkomponente und/oder im Bedienplatz 2.

In Figur 3 ist ein Ausführungsbeispiel eines Bediensystems 1 für ein hier beschriebenes Verfahren dargestellt. Bei der Systemkomponente 3 handelt es sich vorliegend insbesondere um eine Außenanlage, wie ein Stellwerk einer Bahnanlage. Als Empfangsgerät 4 wird bevorzugt ein Smartphone verwendet. Das Bediensystem 1 wird anhand der beispielhaften Verfahrensschritte i) bis xvii) nachfolgend näher erläutert:
i) Der Bediener 5 betrachtet den Bildschirm 7 und beabsichtigt, den Zustand 10 eines Elementes der Außenanlage 3 zu überprüfen.
ii) Der Bediener 5 klickt zum Beispiel auf ein als "belegt" gekennzeichnetes Gleiselement und wählt zum Beispiel die Aktion "Belegtmeldung prüfen" aus.
iii) Der Bedienplatz 2 mit einem Bedienplatzrechner stellt anhand der in seinem Prozessabbild 8 vorhandenen Informationen den zweiten Prüfdatensatz 12 zum verarbeiteten Zustand 10* des betreffenden Elements zusammen und verschlüsselt den zweiten Prüfdatensatz 12 mit dem öffentlichen Schlüssel des Prüfrechners 6, der insbesondere ein Backendserver ist.
iv) Zum Beispiel per NFC überträgt der Bedienplatz 2 diesen zweiten Prüfdatensatz 12 an das Smartphone 4.
v) Der Bedienplatz 2 zeigt auf dem Bildschirm 7 am betroffenen Element den ersten Prüfdatensatz 11 mit den verschlüsselten Stellwerksinformationen als 2D-Code, zum Beispiel als QR-Code, an.
vi) Das Smartphone 4 bestätigt die NFC-Übertragung und fordert anschließend etwa einen Fahrdienstleiter als Bediener 5 auf, mit der Kamera des Smartphones 4 den 2D-Code mit den verschlüsselten Stellwerksdaten des ersten Prüfdatensatzes 11 des betroffenen Elementes auf dem Bildschirm 7 einzuscannen.
vii) Im nächsten Schritt hält der Bediener 5 das Smartphone 4 so vor den Bildschirm 7, sodass die Kamera des Smartphones 4 den 2D-Code lesen kann.
viii) Das Smartphone 4 kann die beiden Prüfdatensätze 11, 12 nicht entschlüsseln, da sie mit dem öffentlichen Schlüssel des Backendservers 6 verschlüsselt sind.
ix) Das Smartphone 4 sendet beide Prüfdatensätze 11, 12 an den Backendserver 6.
x) Der Backendserver 6 entschlüsselt die Datensätze 11, 12:
   a) Der eine Datensatz 11 enthält die Daten, so wie sie vom sicheren System 3 verschlüsselt übermittelt wurden.
   b) Der andere Datensatz 12 enthält die vom Bedienplatz 2 bereitgestellten Informationen. Der Bedienplatz 2 hat die Anlagenzustände 10, die vom sicheren System 3 über den Informationskanal 14 gesendet wurden, empfangen, zum Zustand 10* weiterverarbeitet, gespeichert und letztlich auf dem Bildschirm 7 zur Anzeige gebracht.
xi) Der Backendserver 6 vergleicht die beiden Datensätze 11, 12 miteinander. Der Backendserver 6 ist gemäß dem zu erreichendem Sicherheitsniveau, auch als Safety Level bezeichnet, ausgeprägt und ist zum Beispiel ein sicherer Vergleicher in einer SIMATIC des Herstellers Siemens oder ist ein 2-aus-3-System. Der Backendserver 6 benötigt kein Wissen über den Inhalt und die Bedeutung der Daten 11, 12.
xii) Der Backendserver 6 speichert das Ergebnis des Vergleichs in zwei Ergebnisdatensätzen 21, 22 ab:
   a) Der eine Datensatz 22 wird mit dem öffentlichen Schlüssel des Smartphones 4 verschlüsselt.
   b) Der andere Datensatz 21 wird dem öffentlichen Schlüssel des Bedienplatzes 2 verschlüsselt.
xiii) Der Backendserver 6 sendet die Ergebnisdatensätze 21, 22 an das Smartphone 4.
xiv) Das Smartphone 4 überträgt den für den Bedienplatz 2 bestimmten Datensatz 21 zum Beispiel mittels NFC an den Bedienplatz 2.
xv) Auf dem Smartphone 4 wird der für das Smartphone 4 bestimmte Datensatz 22 entschlüsselt und dem Bediener 5 angezeigt; die Anzeige enthält zum Beispiel in textueller Form alle relevanten Daten, wie eine Element-ID, den Zustand des Elements, das Ergebnis des Vergleichs.
xvi) Auf dem Bedienplatz 2 wird der für den Bedienplatz 2 bestimmte Datensatz 21 entschlüsselt und dem Bediener 5 angezeigt; die Anzeige enthält zum Beispiel in grafischer Form am ausgewählten Element alle relevanten Daten: die Element-ID, den Zustand des Elements, das Ergebnis des Vergleiches.
xvii) Der Bediener 5 vergleicht, ob auf dem Smartphone 4 und dem Bildschirm 7 des Bedienplatzes 2 für ein und dasselbe Element der Systemkomponente 3 ein positiver Vergleich bestätigt wird. In diesem Fall weiß der Bediener 5, dass der ursprünglich vom Bedienplatz 2 dargestellte Zustand 10* des fraglichen Elementes richtig ist.

Die Aspekte des hier beschriebenen Verfahrens in einer bevorzugten Ausführungsform mit einem hier beschriebenen Bediensystem 1 lassen sich somit wie folgt zusammenfassen:
- Zur Prüfung des Zustandes 10 eines Elements der Systemkomponente 3 sind der Bedienplatz 2, das Empfangsgerät 4 und der Prüfrechner 6 vorhanden. Insbesondere durch die Nutzung eines 2D-Codes muss der Bediener 5 aktiv das Empfangsgerät 4 und den Bedienplatz 2 in die gesamte Operation einbinden. Prüfrechner 6, Empfangsgerät 4 und Bedienplatz-Hardware sind bevorzugt Standardkomponenten und benötigen dann keine besonderen Eigenschaften.
- Der Bedienplatz 2 selbst kennt den Inhalt des von der Systemkomponente 3 verschlüsselt bereit gestellten Datentelegramms 11 bevorzugt nicht und fungiert in diesem Fall lediglich als Kommunikationskanal.
- Das Empfangsgerät 4 und der Prüfrechner 6 können bevorzugt keine Daten direkt von der Systemkomponente 3 empfangen oder an die Systemkomponente 3 senden. Durch den Weg über den Bedienplatz 2 und die explizite Verwendung insbesondere des 2D-Codes und der NFC-Kommunikation kann die Prüfung eines Elementzustandes nur vom Bedienplatz 2 aus veranlasst werden.
- Beim Vergleich benötigt der Prüfrechner 6 keinerlei Informationen über die Systemkomponente 3, insbesondere über die Eisenbahnanlage. Der Prüfrechner 6 vergleicht in generischer Art und Weise zwei Datensätze 11, 12 und kann dies prinzipiell für eine beliebige Anzahl von unterschiedlichen Bedienplätzen 2 und Anfragen tun, solange die Antwortzeiten ausreichen. Der Prüfrechner 6 kann als Clouddienst realisiert werden.
- Der Bediener 5 bekommt das Ergebnis des Vergleiches auf zwei unterschiedlichen Anzeigen präsentiert.
- Die Diversität der Verarbeitungswege, die zu einer Erhöhung der Sicherheit beiträgt, wird durch unterschiedliche Hardware (Bedienplatz 2, Empfangsgerät 4 und Prüfrechner 6) sowie durch unterschiedliche Kommunikationswege wie 2D-Code-Scan und NFC-Übertragung und durch unterschiedliche Software erreicht.
- Die Anwendung (App) auf dem Smartphone 4 kann generisch ausgelegt werden, da sie keine spezifischen Informationen über die Systemkomponente 3, insbesondere über die Eisenbahnanlage, benötigt.
- Das beschriebene Verfahren ist nicht abhängig vom Typ des Stellwerks oder auch eines RBCs als Systemkomponente 3.
- Der Bedienplatz 2 ermöglicht erst durch die Kombination mit dem Empfangsgerät 4 und dem Prüfrechner 6 die Prüfung eines Elementzustandes 10, benötigt aber bis auf die Generierung zum Beispiel des 2D-Codes und die Speicherung der verschlüsselten Stellwerksdaten im Prozessabbild 8 keine besonderen Funktionalitäten für diese Aufgabe.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Der

Schutzumfang der Erfindung ist durch die unabhängigen Ansprüche definiert.

### Bezugszeichenliste

- 1: Bediensystem
- 2: Bedienplatz
- 3: Systemkomponente
- 4: Empfangsgerät
- 4*: nicht registriertes Empfangsgerät
- 5: Bediener
- 6: Prüfrechner
- 7: Bildschirm
- 8: Prozessabbild
- 10: zu prüfender Zustand der Systemkomponente
- 10*: verarbeiteter Zustand im Prozessabbild des Bedienplatzes
- 11: verschlüsselter erster Prüfdatensatz
- 12: verschlüsselter zweiter Prüfdatensatz
- 13: Kommunikationskanal
- 14: Informationskanal
- 21: erster Ergebnisdatensatz
- 22: zweiter Ergebnisdatensatz
- 31: erster Datenkanal
- 32: zweiter Datenkanal
- Tc: maximale Bestätigungszeitspanne

## Patentansprüche

1. Verfahren zur generischen Anzeigesicherung in einer Eisenbahnanlage mit den folgenden Schritten in der angegebenen Reihenfolge:
A) Auswählen eines zu prüfenden Zustands (10) eines Elements einer Systemkomponente (3) der Eisenbahnanlage an einem Bedienplatz (2) mit einem Prozessabbild (8), wobei das Prozessabbild (8) aus Informationen von der Systemkomponente (3) über den Zustand (10) aufgebaut wurde und einen verarbeiteten Zustand (10*) angibt und wobei auf einem Bildschirm (7) des Bedienplatzes (2) das Prozessabbild (8) zur Anzeige gebracht wird,
B) Bereitstellen eines verschlüsselten ersten Prüfdatensatzes (11) und eines verschlüsselten zweiten Prüfdatensatzes (12) durch den Bedienplatz (2) je über den zu prüfenden Zustand (10),
C) Senden des ersten Prüfdatensatzes (11) an ein Empfangsgerät (4) mit einem ersten Datenkanal (31),
D) Senden des zweiten Prüfdatensatzes (12) an das Empfangsgerät (4) mit einem zweiten Datenkanal (32), der vom ersten Datenkanal (31) verschieden ist,
E) Senden des verschlüsselten ersten und zweiten Prüfdatensatzes (11, 12) mit dem Empfangsgerät (4) weiter an einen Prüfrechner (6),
F) Entschlüsseln des ersten und zweiten Prüfdatensatzes (11, 12) im Prüfrechner (6) und Vergleichen der beiden Prüfdatensätze (11, 12) miteinander,
G) Erzeugen eines ersten Ergebnisdatensatzes (21) und eines zweiten Ergebnisdatensatzes (22) über ein Ergebnis des Vergleichs des Schritts F) und Senden der beiden Ergebnisdatensätze (21, 22) vom Prüfrechner (6) an das Empfangsgerät (4),
H) Weiterleiten des ersten Ergebnisdatensatzes (21) vom Empfangsgerät (4) an den Bedienplatz (2) und Entschlüsseln des ersten Ergebnisdatensatzes (21) erst im Bedienplatz (2) sowie Entschlüsseln des zweiten Ergebnisdatensatzes (22) im Empfangsgerät (4), und
I) Vergleichen der beiden entschlüsselten Ergebnisdatensätze (21, 22),
wobei
- der erste Prüfdatensatz (11) verschlüsselt von der Systemkomponente (4) stammt, im Bedienplatz (2) verschlüsselt bleibt und vom Bedienplatz (2) unentschlüsselt über den ersten Datenkanal (31) an das Empfangsgerät (4) weitergereicht wird, und
- die Systemkomponente (4) den Zustand (10) dem Bedienplatz (2) außerdem unverschlüsselt mitteilt und hieraus der Zustand in dem Prozessabbild (8) als der verarbeitete Zustand (10*) hinterlegt wird und aus dem Prozessabbild (8) der zweite Prüfdatensatz (12) über den Zustand vom Bedienplatz (2) verschlüsselt erzeugt und über den zweiten Datenkanal (32) an das Empfangsgerät (8) weitergeleitet wird, sodass mit dem Verfahren überprüft wird, ob der im Prozessabbild (8) hinterlegter verarbeiteter Zustand (10*) mit dem im ersten Prüfdatensatz (11) enthaltenen Zustand (10) übereinstimmt.

2. Verfahren nach einem der vorhergehenden Ansprüche,
wobei
- das Empfangsgerät (4) ein Smartphone ist,
- der zweite Datenkanal (32) eine NFC-Datenübertragung ist, und
- der erste Datenkanal (31) eine visuelle Datenübertragung ist, sodass der erste Prüfdatensatz (11) am Bedienplatz (2) im Schritt C) als zweidimensionaler Code dargestellt wird.

3. Verfahren nach einem der vorhergehenden Ansprüche,
wobei
- im Schritt H) das Weiterleiten des ersten Ergebnisdatensatzes (21) vom Empfangsgerät (4) an den Bedienplatz (2) mittels des ersten Datenkanals (31) erfolgt, und
- im Schritt I) der Vergleich durch einen Bediener (5) erfolgt und dabei der erste Ergebnisdatensatz (21) direkt am Bedienplatz (2) angezeigt wird und der zweite Ergebnisdatensatz (21) direkt am Empfangsgerät (4) angezeigt wird.

4. Verfahren nach dem unmittelbar vorhergehenden Anspruch, wobei
- die Schritte B), D), E), F), G) und H) computerimplementiert durchgeführt werden, und
- die Schritte A), C) und I) mindestens teilweise durch den Bediener (5) erfolgen.

5. Verfahren nach einem der vorhergehenden Ansprüche,
wobei
- zumindest während der Schritte C) bis G) keine direkte Kommunikationsverbindung zwischen dem Prüfrechner (6) und dem Bedienplatz (2) vorliegt, und
- der erste Prüfdatensatz (11) und der zweite Prüfdatensatz (12) nur vom Bedienplatz (2) bereitstellbar sind und nur vom Bedienplatz (2) aus ausschließlich vom Empfangsgerät (4) wirksam empfangbar sind.

6. Verfahren nach einem der vorhergehenden Ansprüche,
wobei
- zwischen den Schritten A) und H) eine zuvor festgelegte maximale Bestätigungszeitspanne (Tc) einzuhalten ist, und
- die Schritte C), D), G) und H) nur mit einem zuvor zugelassenen und im Prüfrechner (6) registrierten Empfangsgerät (4) erfolgen können.

7. Verfahren nach einem der vorhergehenden Ansprüche,
wobei der Zustand (10) eine aktuell vorliegende Einstellung eines Teils der funktionskritischen Systemkomponente (3) ist und die Systemkomponente (3) aus folgender Gruppe ausgewählt ist: Bahnstellwerk, ECTS-Streckenzentrale, Bahnsignalanlage.

8. Verfahren nach einem der vorhergehenden Ansprüche,
wobei der Prüfrechner (6) ein gesicherter Rechner ist und zumindest während der Schritte E) bis G) über keine Informationen hinsichtlich der Art des zu prüfenden Zustands (10) verfügt.

9. Bediensystem (1) für ein Verfahren nach einem der vorherigen Ansprüche umfassend
den Bedienplatz (2) mit dem Prozessabbild (8),
das Empfangsgerät (4), und
den Prüfrechner (6),
wobei der Bedienplatz (2) dazu eingerichtet ist,
das Auswählen des zu prüfenden Zustands (10) eines Elements der Systemkomponente (3) der Eisenbahnanlage zu ermöglichen,
den ersten Prüfdatensatz (11) verschlüsselt von der Systemkomponente (4) zu empfangen,
den von der Systemkomponente (4) unverschlüsselt mitgeteilten Zustand (10) zu empfangen,
den Zustand (10) in dem Prozessabbild (8) als verarbeiteten Zustand (10*) zu hinterlegen,
aus dem Prozessabbild (8) den zweiten Prüfdatensatz (12) über den Zustand (10) verschlüsselt zu erzeugen,
den verschlüsselten ersten Prüfdatensatz (11) und den verschlüsselten zweiten Prüfdatensatz (12) je über den Zustand (10) zu erzeugen,
den ersten Prüfdatensatz (11) mit dem ersten Datenkanal (31) und den zweiten Prüfdatensatz (12) mit dem zweiten Datenkanal (32), der vom ersten Datenkanal (32) verschieden ist, direkt an das Empfangsgerät (4) zu senden,
wobei das Empfangsgerät (4) dazu eingerichtet ist,
den ersten Prüfdatensatz (11) und den zweiten Prüfdatensatz (12) direkt vom Bedienplatz (2) zu empfangen und den ersten Prüfdatensatz (11) und den zweiten Prüfdatensatz (12) an den Prüfrechner (6) zu senden,
wobei der Prüfrechner (6) dazu eingerichtet ist,
den ersten Prüfdatensatz (11) und den zweiten Prüfdatensatz (12) zu empfangen, zu entschlüsseln und die beiden entschlüsselten Prüfdatensätze (11, 12) miteinander zu vergleichen,
den ersten Ergebnisdatensatz (21) und den zweiten Ergebnisdatensatz (22) über das Ergebnis des Vergleichs zu erzeugen,
und die beiden Ergebnisdatensätze (21, 22) verschlüsselt an das Empfangsgerät (4) zu senden,
wobei das Empfangsgerät (4) weiterhin dazu ausgebildet ist,
den ersten Ergebnisdatensatz (21) an den Bedienplatz (2) weiterzuleiten, ohne diesen zu entschlüsseln, und
den zweiten Ergebnisdatensatz (22) zu entschlüsseln sowie den entschlüsselten zweiten Ergebnisdatensatz (22) anzuzeigen,
wobei der Bedienplatz (2) weiterhin dazu ausgebildet ist, den ersten Ergebnisdatensatz (21) zu entschlüsseln, und
den entschlüsselten ersten Datensatz (21) anzuzeigen,
wodurch das Bediensystem (1) dazu ausgebildet ist, zu überprüfen, ob ein im Prozessabbild (8) hinterlegter verarbeiteter Zustand (10*) mit dem im ersten Prüfdatensatz (11) enthaltenen Zustand (10) übereinstimmt.

## Claims

1. Method for generic display protection in a railway installation having the following steps in the specified sequence:
A) selecting a state (10), to be tested, of an element of a system component (3) of the railway installation at a control station (2) with a process image (8), wherein the process image (8) has been set up from information from the system component (3) about the state (10) and specifies a processed state (10*) and wherein the process image (8) is displayed on a monitor (7) of the control station (2),
B) providing an encrypted first test data set (11) and an encrypted second test data set (12) by means of the control station (2) about the state to be tested in each case (10),
C) sending the first test data set (11) to a receiving device (4) with a first data channel (31),
D) sending the second test data set (12) to the receiving device (4) with a second data channel (32), which differs from the first data channel (31),
E) sending the encrypted first and second test data set (11, 12) with the receiving device (4) further to a test computer (6),
F) decrypting the first and second test data set (11, 12) in the test computer (6) and comparing the two test data sets (11, 12) with one another,
G) generating a first result data set (21) and a second result data set (22) relating to a result of the comparison of step F) and sending the two result data sets (21, 22) from the test computer (6) to the receiving device (4),
H) forwarding the first result data set (21) from the receiving device (4) to the control station (2) and decrypting the first result data set (21) firstly in the control station (2) and decrypting the second result data set (22) in the receiving device (4), and
I) comparing the two decrypted result data sets (21, 22),
wherein
- the first test data set (11) originates in encrypted form from the system component (4), remains encrypted in the control station (2) and is passed without being decrypted from the control station (2) by way of the first data channel (31) to the receiving device (4), and
- the system component (4) moreover communicates the state (10) to the control station (2) in unencrypted form and herefrom the state is stored in the process image (8) as the processed state (10*) and from the process image (8) the second test data set (12) about the state is generated in encrypted form by the control station (2) and forwarded via the second data channel (32) to the receiving device (8) so that a check is carried out with the method to determine whether the processed state (10*) stored in the process image (8) matches with the state (10) contained in the first test data set (11).

2. Method according to one of the preceding claims,
wherein
- the receiving device (4) is a smartphone,
- the second data channel (32) is an NFC data transmission, and
- the first data channel (31) is a visual data transmission so that in step C) the first test data set (11) is shown at the control station (2) as a two-dimensional code.

3. Method according to one of the preceding claims,
wherein
- in step H) the first result data set (21) is forwarded from the receiving device (4) to the control station (2) by means of the first data channel (31), and
- in step I) the comparison takes place by an operator (5) and in the process the first result data set (21) is shown directly on the control station (2) and the second result data set (21) is shown directly on the receiving device (4).

4. Method according to the immediately preceding claim,
wherein
- the steps B), D), E), F), G) and H) are carried out in a computer-implemented manner, and
- the steps A), C) and I) take place at least partially by the operator (5).

5. Method according to one of the preceding claims,
wherein
- at least during the steps C) to G), there is no direct communication link between the test computer (6) and the control station (2), and
- the first test data set (11) and the second test data set (12) can only be provided by the control station (2) and can only be effectively received from the control station (2) exclusively by the receiving device (4).

6. Method according to one of the preceding claims,
wherein
- between steps A) and H), a previously established maximum confirmation time span (Tc) is to be complied with, and
- the steps C), D), G) and H) can only take place with a previously permitted receiving device (4) which has been registered in the test computer (6).

7. Method according to one of the preceding claims,
wherein the state (10) is a currently existing setting of a part of the functionally critical system component (3) and the system component (3) is selected from the following group: railway interlocking, ECTS route control centre, railway signalling system.

8. Method according to one of the preceding claims,
wherein the test computer (6) is a secured computer and does not have any information regarding the type of the state (10) to be tested at least during steps E) to G).

9. Control system (1) for a method according to one of the preceding claims, comprising
the control station (2) with the process image (8),
the receiving device (4), and
the test computer (6),
wherein the control station (2) is designed
to enable the selection of the state (10) to be tested of an element of the system component (3) of the railway installation,
to receive the first test data set (11) in encrypted form from the system component (4),
to receive the state (10) communicated in unencrypted form from the system component (4),
to store the state (10) in the process image (8) as a processed state (10*),
to generate the second test data set (12) relating to the state (10) in encrypted form from the process image (8),
to generate the encrypted first test data set (11) and the encrypted second test data set (12) relating to the state (10) in each case,
to send the first test data set (11) with the first data channel (31) and the second test data set (12) with the second data channel (32), which differs from the first data channel (32), directly to the receiving device (4),
wherein the receiving device (4) is designed
to receive the first test data set (11) and the second test data set (12) directly from the control station (2) and to send the first test data set (11) and the second test data set (12) to the test computer (6),
wherein the test computer (6) is designed
to receive the first test data set (11) and the second test data set (12), to decrypt the same and to compare the two decrypted test data sets (11, 12) with one another,
to generate the first result data set (21) and the second result data set (22) about the result of the comparison, and to send the two result data sets (21, 22) in encrypted form to the receiving device (4),
wherein the receiving device (4) is further embodied
to forward the first result data set (21) to the control station (2) without decrypting the same, and
to decrypt the second result data set (22) and to display the decrypted second result data set (22),
wherein the control station (2) is further embodied to decrypt the first result data set (21) and
to display the decrypted first data set (21),
as a result of which the control system (1) is embodied to check whether a processed state (10*) stored in the process image (8) matches the state (10) contained in the first test data set (11).

## Revendications

1. Procédé de sauvegarde d'affichage générique dans une installation de chemin de fer comprenant les stades suivants dans l'ordre de succession indiqué :
A) sélectionner un état (10) à contrôler d'un élément d'un composant (3) de système de l'installation de chemin de fer en un emplacement (2) de vigilance par une représentation (8) de processus, dans lequel la représentation (8) de processus a été construite à partir d'informations du composant (3) de système sur l'état (10) et indique un état (10*) traité et dans lequel on met à l'affichage la représentation (8) de processus sur un écran (7) de l'emplacement (2) de vigilance,
B) se procurer un premier ensemble (11) de données de contrôle chiffré et un deuxième ensemble (12) de données de contrôle chiffré par l'emplacement (2) de vigilance chacun sur l'état (10) à contrôler,
C) envoyer le premier ensemble (11) de données de contrôle à un appareil (4) de réception par un premier canal (31) de données,
D) envoyer le deuxième ensemble (12) de données de contrôle à l'appareil (4) de réception par un deuxième canal (32) de données, qui est différent du premier canal (31) de données,
E) acheminer à un ordinateur (6) de contrôle, par l'appareil (4) de réception, les premier et deuxième ensembles (11, 12) de données de contrôle chiffrés,
F) déchiffrer les premier et deuxième ensembles (11, 12) de données de contrôle dans l'ordinateur (6) de contrôle et comparer entre eux les deux ensembles (11, 12) de données de contrôle,
G) produire un premier ensemble (21) de données de résultat et un deuxième ensemble (22) de données de résultat sur un résultat de la comparaison du stade F) et envoyer les deux ensembles (21, 22) de données de résultat de l'ordinateur (6) de contrôle à l'appareil (4) de réception,
H) acheminer le premier ensemble (21) de données de résultat de l'appareil (4) de réception à l'emplacement (2) de vigilance et déchiffrer le premier ensemble (21) de données de résultat seulement à l'emplacement (2) de vigilance, ainsi que déchiffrer le deuxième ensemble (22) de données dans l'appareil (4) de réception, et
I) comparer les deux ensembles (21, 22) de données de résultat déchiffrés,
dans lequel
- le premier ensemble (11) de données de contrôle provient chiffré du composant (4) de système, reste chiffré à l'emplacement (2) de vigilance et continue à aller, non déchiffré, de l'emplacement (2) de vigilance à l'appareil (4) de réception par le premier canal (31) de données,
- le composant (4) de système fait part, de manière en outre non chiffrée, de l'état (10) à l'emplacement (2) de vigilance et l'état en est mis en mémoire dans la représentation (8) du processus sous la forme de l'état (10*) traité et, à partir de la représentation (8) de processus, le deuxième ensemble (12) de données de contrôle sur l'état est produit de manière chiffrée par l'emplacement (2) de vigilance et est acheminé à l'appareil (8) de réception par le deuxième canal (32) de données, de manière à contrôler par le procédé, si l'état (10*) traité mis en mémoire dans la représentation (8) de processus coïncide avec l'état (10) contenu dans le premier ensemble (11) de données de contrôle.

2. Procédé suivant l'une des revendications précédentes, dans lequel
- l'appareil (4) de réception est un téléphone intelligent,
- le deuxième canal (32) de données est une transmission de données NFC, et
- le premier canal (31) de données est une transmission de données visuelle de sorte que le premier ensemble (11) de données de contrôle est représenté à l'emplacement (2) de vigilance dans le stade C) sous la forme d'un code en deux dimensions.

3. Procédé suivant l'une des revendications précédentes, dans lequel,
- dans le stade H), l'acheminement du premier ensemble (21) de données de résultat de l'appareil (4) de réception à l'emplacement (2) de vigilance s'effectue au moyen du premier canal (31) de données, et
- dans le stade I), la comparaison s'effectue par un opérateur (5) et ainsi le premier ensemble (21) de données de résultat est affiché directement à l'emplacement (2) de vigilance et le deuxième ensemble (21) de données de résultat est affiché directement à l'appareil (4) de réception.

4. Procédé suivant la revendication immédiatement précédente, dans lequel
- on effectue les stades B), D), E), F), G) et H) en mettant en œuvre un ordinateur, et
- on effectue les stades A), C) et I) au moins en partie par l'opérateur (5).

5. Procédé suivant l'une des revendications précédentes, dans lequel
- au moins pendant les stades C) à G), il n'y a pas de liaison de communication directe entre l'ordinateur (6) de contrôle et l'emplacement (2) de vigilance, et
- le premier ensemble (11) de données de contrôle et le deuxième ensemble (12) de données de contrôle ne sont mis à disposition que par l'emplacement (2) de vigilance et ne peuvent être reçus de manière efficace, exclusivement par l'appareil (4) de réception, qu'à partir de l'emplacement (2) de vigilance.

6. Procédé suivant l'une des revendications précédentes, dans lequel
- entre les stades A) et H) on observe un laps (Tc) de temps de confirmation maximum fixé auparavant, et
- les stades C), D), G) et H) ne peuvent être effectués que par un appareil (4) de réception autorisé auparavant et enregistré dans l'ordinateur (6) de contrôle.

7. Procédé suivant l'une des revendications précédentes, dans lequel l'état (10) est un réglage en cours d'une partie du composant (3) de système critique pour le fonctionnement et le composant (3) de système est choisi dans le groupe suivant : poste d'aiguillage de voie, centrale de voie ECTS, installation de signal de voie.

8. Procédé suivant l'une des revendications précédentes, dans lequel l'ordinateur (6) de contrôle est un ordinateur sécurisé et au moins pendant les stades E) à G) ne dispose pas d'information concernant le type de l'état (10) à contrôler.

9. Système (1) de vigilance pour un procédé suivant l'une des revendications précédentes, comprenant
l'emplacement (2) de vigilance ayant la représentation (8) de processus,
l'appareil (4) de réception, et
l'ordinateur (6) de contrôle,
dans lequel l'emplacement (2) de vigilance est agencé pour permettre la sélection de l'état (10) à contrôler d'un élément du composant (3) de système de l'installation de chemin de fer,
recevoir du composant (4) de système de manière chiffrée le premier ensemble (11) de données de contrôle,
recevoir l'état (10) communiqué de manière non chiffrée par le composant (4) de système,
mettre en mémoire, sous forme d'état (10*) traité, l'état (10) dans la représentation (8) de processus, produire, de manière chiffrée, à partir de la représentation (8) de processus, le deuxième ensemble (12) de données de contrôle sur l'état (10),
produire le premier ensemble (11) de données de contrôle chiffré et le deuxième ensemble (12) de données de contrôle chiffré chacun sur l'état (10),
envoyer, directement à l'appareil (4) de réception, le premier ensemble (11) de données de contrôle par le premier canal (31) de données et le deuxième ensemble (12) de données de contrôle par le deuxième canal (32) de données, qui est différent du premier canal (32) de données,
dans lequel l'appareil (4) de réception est agencé
pour recevoir, directement de l'emplacement (2) de vigilance, le premier ensemble (11) de données de contrôle et le deuxième ensemble (12) de données de contrôle et pour envoyer, à l'ordinateur (6) de contrôle, le premier ensemble (11) de données de contrôle et le deuxième ensemble (12) de données de contrôle,
dans lequel l'ordinateur (6) de contrôle est agencé
pour recevoir le premier ensemble (11) de données de contrôle et le deuxième ensemble (12) de données de contrôle, pour déchiffrer et pour comparer entre eux les deux ensembles (11, 12) de données de contrôle déchiffrés,
pour produire le premier ensemble (21) de données de résultat et le deuxième ensemble (22) de données de résultat sur le résultat de la comparaison,
et pour envoyer, à l'appareil (4) de réception, de manière chiffrée, les deux ensembles (21, 22) de données de résultat,
dans lequel l'appareil (4) de réception est constitué en outre
pour acheminer le premier ensemble (21) de données de résultat à l'emplacement (2) de vigilance, sans le déchiffrer, et
pour déchiffrer le deuxième ensemble (22) de données de résultat, ainsi qu'afficher le deuxième ensemble (22) de données de résultat déchiffré,
dans lequel l'emplacement (2) de vigilance est constitué en outre
pour déchiffrer le premier ensemble (21) de données de résultat, et
pour afficher le premier ensemble (21) de données déchiffré,
grâce à quoi le système (1) de vigilance est constitué pour contrôler, si l'état (10*) traité mis en mémoire dans la représentation (8) de processus coïncide avec l'état (10) contenu dans le premier ensemble (11) de données de contrôle.
